# EUROPÄISCHE PATENTANMELDUNG

(11) **EP 3 698 865 A1**
(43) Veröffentlichungstag der Anmeldung: **26.08.2020**
(21) Anmeldenummer: 19158234.5
(22) Anmeldetag: 20.02.2019
(51) Int. Cl.: B01D 53/94, B01J 29/74, B01J 29/78

(54) **PLATIN- UND MANGANHALTIGER ZEOLITH**

(71) Anmelder: UMICORE AG & CO. KG, 63457 Hanau-Wolfgang (DE)
(72) Erfinder: EICH, Andreas, 63571 Geinhausen (DE)

(57) **Zusammenfassung**

Die vorliegende Erfindung betrifft einen Zeolithen, der Mangan und Platin umfasst, sowie einen diesen Zeolithen enthaltenden Katalysator.

## Beschreibung

Die vorliegende Erfindung betrifft einen platin- und manganhaltigen Zeolithen und seine Verwendung als Oxidationskatalysator zur Reinigung der Abgase von mager betriebenen Verbrennungsmotoren, insbesondere Dieselmotoren.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während zur Entfernung der Partikelemissionen Dieselpartikelfilter mit und ohne katalytisch aktive Beschichtung geeignet sind und Stickoxide beispielsweise durch selektive katalytische Reduktion (Selective Catalytic Reduction SCR) an einem sogenannten SCR-Katalysator zu Stickstoff umgesetzt werden können, werden Kohlenmonoxid und Kohlenwasserstoffe durch Oxidation an einem geeigneten Oxidationskatalysator unschädlich gemacht. Daneben haben Oxidationskatalysatoren oft die Aufgabe, für einen abströmseitigen SCR-Katalysator ein optimales Verhältnis von Stickstoffmonoxid zu Stickstoffdioxid einzustellen.

Oxidationskatalysatoren sind in der Literatur umfangreich beschrieben, siehe zum Beispiel EP2000639A1. Es handelt sich dabei beispielsweise um sogenannte Durchflusssubstrate aus Keramik oder Metall, die als wesentliche katalytisch aktive Bestandteile Edelmetalle, wie Platin und Palladium, auf hochoberflächigen, porösen, hochschmelzenden Oxiden, beispielsweise Aluminiumoxid, tragen.
Solche Katalysatoren haben den Nachteil, dass sie insbesondere unter mageren Bedingungen und bei hohen Abgastemperaturen Aktivität einbüßen. Dieser Effekt ist insbesondere auf die Sinterung der katalytisch aktiven Edelmetalle, also insbesondere von Platin und Palladium, und dem damit verbundenen Verlust an Oberfläche zurückzuführen. Daneben verlieren auch Trägermaterialien wie Aluminiumoxid mit zunehmender Gebrauchsdauer an Oberfläche. Im Ergebnis weisen somit die herkömmlichen Oxidationskatalysatoren einen erheblichen Leistungsunterschied zwischen frischem und gealtertem Zustand auf.

Die Verwendung von Manganverbindungen, insbesondere Manganoxid, als Bestandteile von Katalysatoren für die Autoabgaskatalyse ist bereits bekannt, siehe zum Beispiel die DE102011109200A1.

Aus der WO2014/080220A1 ist die Verwendung von Manganoxid (MnO₂) zur Kontrolle der Schwefel-Emissionen bekannt. Dabei werden Manganoxid und Edelmetall in einer Beschichtung auf ein Filtersubstrat aufgebracht, wobei allerdings darauf zu achten ist, dass das Edelmetall und das Manganoxid physisch voneinander getrennt vorliegen. Dies ist gemäß der WO2014/080220A1 nötig, weil das Manganoxid die Oxidationsfähigkeit des Edelmetalls für Kohlenwasserstoff und Kohlenmonoxid "vergiften" könnte.

Die WO2015/095056 A1 und WO2015/095058 A1 beschreiben aus mehreren katalytisch aktiven Schichten aufgebaute Katalysatoren, wobei eine dieser Schichten ein manganhaltiges Trägeroxid für eine Platin- und optional eine Palladium-Komponente enthält. Neben der Oxidation von Kohlenwasserstoff und Kohlenmonoxid sind diese Katalysatoren auch in der Lage Stickstoffmonoxid zu Stickstoffdioxid zu oxidieren.

Es wurde nun überraschenderweise gefunden, dass sich Zeolithe, die sowohl Platin, als auch Mangan enthalten, in hervorragender Weise als Oxidationskatalysatoren, insbesondere zur Oxidation von Stickstoffmonoxid zu Stickstoffdioxid, eignen.

Die vorliegende Erfindung betrifft demnach einen Zeolithen, der Mangan und Platin umfasst.

Zeolithe sind zwei- oder dreidimensionale Strukturen, als deren kleinste Strukturen SiO₄- und AlO₄-Tetraeder angesehen werden können. Diese Tetraeder fügen sich zu größeren Strukturen zusammen, wobei jeweils zwei über ein gemeinsames Sauerstoffatom verbunden sind. Dabei können Ringe verschiedener Größe gebildet werden, beispielsweise Ringe aus vier, sechs oder auch neun tetraedrisch koordinierten Silizium- oder Aluminiumatomen. Die verschiedenen Zeolithtypen werden häufig über die größte Ringgröße definiert, weil diese Größe bestimmt, welche Gastmoleküle in die Zeolithstruktur eindringen können und welche nicht. Es ist geläufig, großporige Zeolithe mit einer maximalen Ringgröße von 12, mittelporige Zeolithe mit einer maximalen Ringgröße von 10 und kleinporige Zeolithe mit einer maximalen Ringgröße von 8 zu unterscheiden.
Zeolithe werden des Weiteren von der Strukturkommision der International Zeolite Association in Strukturtypen unterteilt, die jeweils mit einem Code aus drei Buchstaben belegt sind, siehe zum Beispiel Atlas of Zeolite Framework Types, Elsevier, 5. Auflage, 2001.

Der erfindungsgemäße Zeolith kann großporig, mittelporig oder kleinporig sein. Mit anderen Worten, er weist bevorzugt größte Kanäle auf, die von 6, 8, 9, 10 oder 12 tetraedrisch koordinierten Atomen gebildet werden.

Der erfindungsgemäße Zeolith gehört insbesondere dem Strukturtyp ABW, ACO, AEI, AEN, AFN, AFT, AFX, ANA, APC, APD, ATT, BEA, BIK, CDO, CHA, DDR, DFT, EAB, EDI, EPI, ERI, ESV, ETL, FAU, FER, GIS, GOO, IHW, KFI, LEV, LTA, MER, MFI, MON, MOR, MWW, NSI, OWE, PAU, PHI, RHO, RTH, SAT, SAV, SIV, SOD, STT, THO, TSC, UEI, VNI, YUG oder ZON an, bevorzugt dem Strukturtyp AEI, AFT, AFX, BEA, CHA, DDR, ERI, ESV, ETL, FER, KFI, LEV oder UFI. AEI, AFX, CHA und FER sind besonders bevorzugte Strukturtypen.

Der erfindungsgemäße Zeolith weist insbesondere einen SAR (silica-to-alumina ratio)-Wert von 2 bis 100, insbesondere von 5 bis 50, auf.

Im Rahmen der vorliegenden Erfindung umfasst der Begriff "Zeolith" ausdrücklich keine Aluminiumoxid und Siliziumoxid umfassende Mischoxide, wie sie in der Literatur zum Beispiel als "SiO₂/Al₂O₃" beschrieben sind.

Das Platin liegt im erfindungsgemäßen Zeolithen bevorzugt als Platin-Kation in der Zeolithstruktur vor, das heißt in ionenausgetauschter Form. Es kann aber auch ganz oder teilweise als Platinmetall und/oder als Platinoxid in der Zeolith-Struktur und/oder auf der Oberfläche der Zeolithstruktur vorliegen. Das Platin kann in Mengen von 0,01 bis 20 Gew.-% vorliegen, bezogen auf die Summe der Gewichte von Zeolith, Mangan und Platin und berechnet als Manganmetall und Platinmetall.
Bevorzugt liegt das Platin in Mengen von 0,5 bis 10, besonders bevorzugt von 0,5 bis 6 Gew.-% und ganz besonders bevorzugt von 0,5 bis 5 Gew.-% vor, bezogen auf die Summe der Gewichte von Zeolith, Mangan und Platin und berechnet als Manganmetall und Platinmetall.

Das Mangan liegt im erfindungsgemäßen Zeolithen bevorzugt als Mangan-Kation in der Zeolithstruktur vor, das heißt in ionenausgetauschter Form. Es kann aber auch ganz oder teilweise als Manganoxid, insbesondere als Mangandioxid (MnO₂) in der Zeolith-Struktur und/oder auf der Oberfläche der Zeolithstruktur vorliegen.
Das Mangan kann in Mengen von 0,01 bis 20 Gew.-% vorliegen, bezogen auf die Summe der Gewichte von Zeolith, Mangan und Platin und berechnet als Mangan-Metall und Platin-Metall.
Bevorzugt liegt das Mangan in Mengen von 0,5 bis 10, besonders bevorzugt von 0,5 bis 6 Gew.-% und ganz besonders bevorzugt von 0,5 bis 5 Gew.-% vor, bezogen auf die Summe der Gewichte von Zeolith, Mangan und Platin und berechnet als Manganmetall und Platinmetall.

Der erfindungsgemäße Zeolith weist bevorzugt ein Masseverhältnis Mangan : Platin von 7:1 bis 1:20 auf, wobei Platin als Platinmetall und Mangan als Manganmetall berechnet ist.

Der erfindungsgemäße Zeolith kann nach an sich bekannten Methoden hergestellt werden. So wird er zum Beispiel durch Imprägnieren eines Zeolithen, der beispielsweise in der H- oder Na-Form vorliegt, mit einer wässrigen Lösung von Platin- und Mangansalzen in den entsprechenden Mengen nach der Incipient Wetness-Methode und anschließender Trocknung und Kalzinierung erhalten. Als wasserlösliches Platinsalz kommt insbesondere Platinnitrat (Pt[NO₃]₂) und als wasserlösliches Mangansalz insbesondere Mangannitrat (Mn[NO₃]₂) in Frage.
Die Kalzinierung des imprägnierten Zeolithen erfolgt insbesondere bei Temperaturen von 250 bis 550°C.

In einer bevorzugten Ausführungsform der vorliegenden Erfindung liegt der erfindungsgemäße Zeolith auf einem Trägersubstrat vor.
Demgemäß betrifft die vorliegende Erfindung auch einen Katalysator umfassend ein Trägersubstrat der Länge L und einen Zeolithen, der Mangan und Platin umfasst.
Das Trägersubstrat kann ein Durchflusssubstrat oder ein Wandflussfilter sein.
Ein Wandflussfilter ist ein Trägersubstrat, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an ihren beiden Enden offen sind.
Wandflussfilter weisen in unbeschichtetem Zustand beispielsweise Porositäten von 30 bis 80, insbesondere 50 bis 75% auf. Ihr durchschnittlicher Porendurchmesser beträgt in unbeschichtetem Zustand beispielsweise 5 bis 30 Mikrometer.
In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

In einer Ausführungsform des erfindungsgemäßen Katalysators liegt der Zeolith, der Mangan und Platin umfasst, in Form einer Beschichtung auf dem Trägersubstrat vor. Dabei kann sich die Beschichtung über die gesamte Länge L des Trägersubstrates oder nur über einen Teil davon erstrecken. In beiden Fällen kann das Trägersubstrat auch eine oder mehrerer weitere katalytisch aktive Beschichtungen tragen.

Im Falle eines Wandflussfilters kann sich die Beschichtung auf den Oberflächen der Eingangskanäle, auf den Oberflächen der Ausgangskanäle und/oder in der porösen Wand zwischen Ein- und Ausgangskanälen befinden.

Erfindungsgemäße Katalysatoren, bei denen der Zeolith, der Mangan und Platin umfasst, in Form einer Beschichtung auf dem Trägersubstrat vorliegen, können nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination). Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer anderen Ausführungsform der vorliegenden Erfindung ist das Trägersubstrat aus dem Zeolithen, der Mangan und Platin umfasst, sowie einer Matrix-komponente gebildet.
Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.
Das extrudierte Trägersubstrat, das den Zeolithen, der Mangen und Platin umfasst, kann in Ausführungsformen der vorliegenden Erfindung mit einer oder mehreren katalytisch aktiven Beschichtungen beschichtet sein.

In einer weiteren Ausführungsform der vorliegenden Erfindung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.
Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.
Substrate aus gewellten Blättern können direkt mit dem Zeolithen, der Mangen und Platin umfasst, beschichtet werden, vorzugsweise werden sie aber zunächst mit einem inerten Material, zum Beispiel Titandioxid, und erst dann mit dem katalytischen Material beschichtet.

Der erfindungsgemäße Katalysator eignet sich in hervorragender Weise als Oxidationskatalysator zur Behandlung von Abgas von mager betriebenen Verbrennungsmotoren. Er eignet sich zur Oxidation von Kohlenwasserstoffen und Kohlenmonoxid, insbesondere aber zur Oxidation von Stickstoffmonoxid zu Stickstoffdioxid. Dabei ist der Unterschied zwischen seiner Aktivität im frischen und im gealterten Zustand deutlich geringer als bei bisher gebräuchlichen Oxidationskatalysatoren, die zum Beispiel auf Aluminiumoxid geträgertes Platin umfassen.

### Beispiel 1

Zunächst wird eine gemischte Platin-/Mangannitratlösung hergestellt, dessen Volumen der 50 prozentigen Wasseraufnahme des verwendeten Zeolithen (Tosoh SC-01; CHA, SAR = 13) entspricht. Bezogen auf die finale Zusammensetzung des Pulvers werden 0,94 Gew.-% Platin und 3 Gew.-% Mangan in einem mechanischen Mischer auf das Pulver aufgetragen. Die anschließende thermische Behandlung umfasst eine Trocknung bei 120 °C, eine Kalzinierung bei 350 °C sowie eine Temperung bei 550 °C an Luft.

In der darauffolgenden Washcoat-Präparation werden 10 % Aluminiumoxidsol (Nyacol AL20) (bezogen auf die Gesamtbeladung) zugesetzt und ein Keramikträger beschichtet, welcher letztlich an Luft bei 120 °C getrocknet, bei 350 °C kalziniert und bei 550 °C getempert wird.

Der erhaltene Katalysator wird nachstehend K1 genannt.

### Beispiel 2

Beispiel 1 wird wiederholt mit dem Unterschied, dass die Manganmenge 4 Gew.-% beträgt.

Der erhaltene Katalysator wird nachstehend K2 genannt.

### Beispiel 3

Beispiel 1 wird wiederholt mit dem Unterschied, dass die Manganmenge 5 Gew.-% beträgt.

Der erhaltene Katalysator wird nachstehend K3 genannt.

### Beispiel 4

Beispiel 1 wird wiederholt mit dem Unterschied, dass die Manganmenge 7 Gew.-% beträgt.

Der erhaltene Katalysator wird nachstehend K4 genannt.

### Beispiel 5

Beispiel 1 wird wiederholt mit dem Unterschied, dass als Zeolith CP914C (Zeolyst, FER, SAR = 21) verwendet wird.

Der erhaltene Katalysator wird nachstehend K5 genannt.

### Vergleichsbeispiel 1

Beispiel 1 wird wiederholt mit dem Unterschied, dass kein Mangan eingesetzt wird. Der erhaltene Katalysator wird nachstehend VK1 genannt.

### Vergleichsbeispiel 2

Beispiel 5 wird wiederholt mit dem Unterschied, dass kein Mangan eingesetzt wird. Der erhaltene Katalysator wird nachstehend VK2 genannt.

### Vergleichsbeispiel 3

Pt- und Pd-Nitrat werden in Wasser im Verhältnis 6:1 vorgelegt und ein Aluminiumoxid zugegeben, so dass die finale Gesamtedelmetallkonzentration im Washcoat 0,94 % beträgt. Nach einer Kreismahlung wird wie in Beispiel 1 beschrieben ein Keramikträger beschichtet. Die abschließende Temperaturbehandlung an Luft umfasst eine Trocknung bei 120 °C sowie eine Kalzinierung und Temperung bei 350 °C.

Der erhaltene Katalysator wird nachstehend VK3 genannt.

### Vergleichsbeispiel 4

Zunächst wird ein Aluminiumoxid in Wasser eingerührt, woraufhin die Injektion eines basischen Pt-Precursors erfolgt. Anschließend wird ein 10%ig silicadotiertes Aluminiumoxid zugegeben und erneut Pt in basischer Form injektiert, so dass insgesamt 0,94 % Pt im Washcoat vorliegen. Letztlich wird der Washoat einer Kreismahlung unterzogen und wie in Beispiel 1 beschrieben ein Keramikträger beschichtet. Trocknung, Kalznierung und Temperung erfolgen an Luft bei 120, 350 und 500 °C. Der erhaltene Katalysator wird nachstehend VK4 genannt.

### Bestimmung der NO-Umsetzung

### a) Alterung

Aus den Katalysatoren K1 bis K4 und VK1 wurden jeweils 4 Bohrkerne geschnitten, wovon einer in frischem Zustand und die übrigen nach hydrothermischer Alterung (10% H₂O, 10% O₂, Rest N₂) in einem Ofen für jeweils 16 Stunden bei 650°C (nachstehend 16H650), 750°C (nachstehend 16H750) bzw. 800°C (nachstehend 16H800) gemessen wurden.

Bei den Katalysatoren K5, VK2, VK3 und VK4 wurde analog vorgegangen, wobei die Alterung bei 750°C ausgelassen wurde.

### b) Testbedingungen im Laborreaktor

Durch die gemäß a) erhaltenen Bohrkerne wurde in einem Laborreaktor ein synthetisches Testabgas aus 10 % O₂, 7,5 % H₂O, 7 % CO₂, 250 ppm CO, 750 ppm NO, Rest N₂ mit 1950 L/Stunde geleitet. Dabei wurde die Temperatur des Testabgases mit 15°C/min von 75°C auf 500°C erhöht und die NO Umsetzung mittels konventioneller Methode bestimmt.

### c) Ergebnisse

Die erhaltenen Ergebnisse zeigen die Figuren 1 bis 7:
Figur 1: K1
Figur 2: K2
Figur 2: K3
Figur 4: K4
Figur 5: K5
Figur 6: VK1
Figur 7: VK2
Figur 8: VK3
Figur 9: VK4

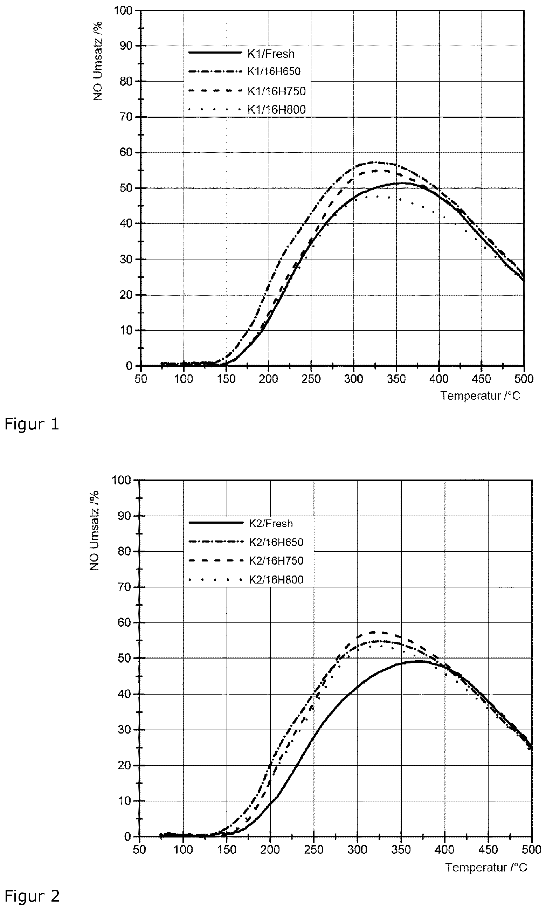

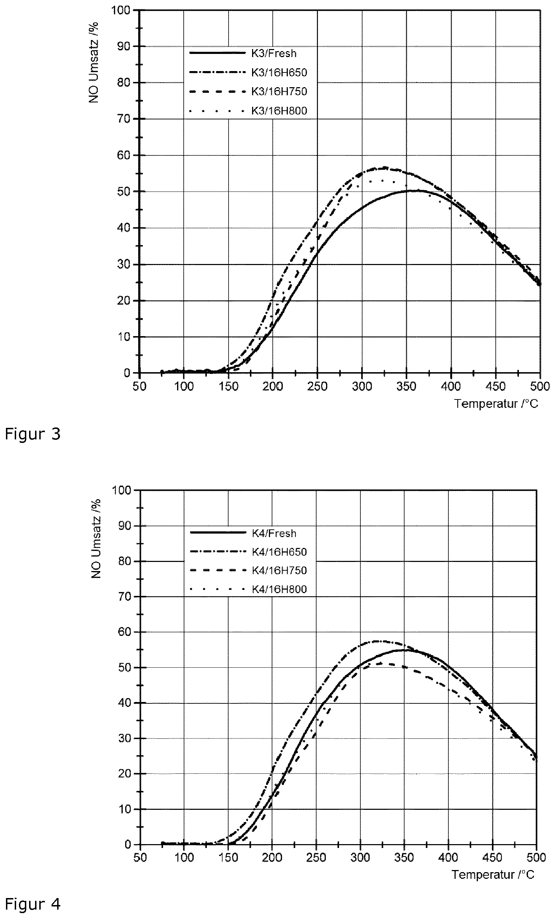

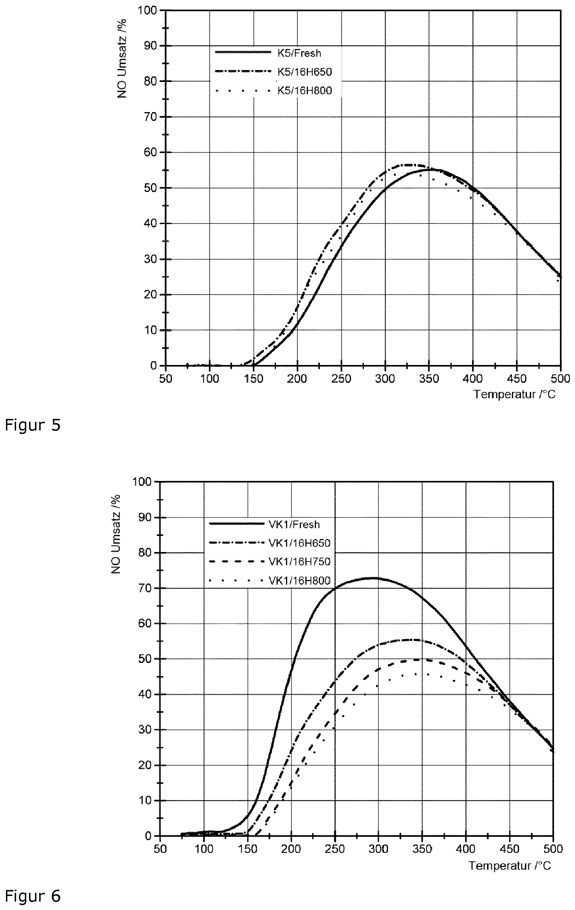

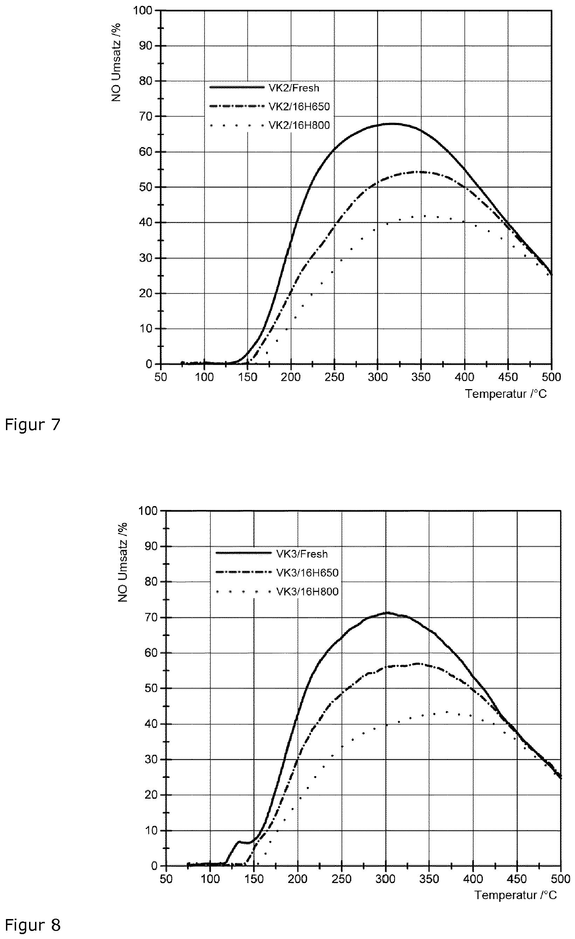

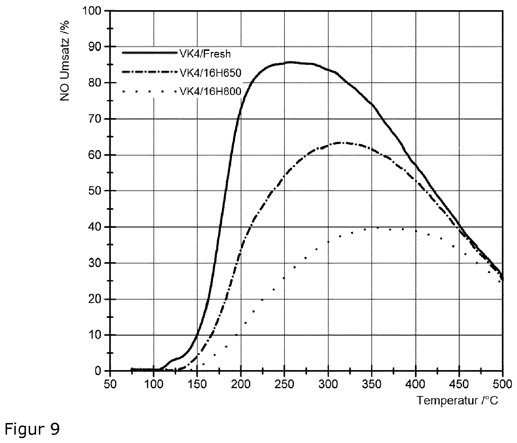

Die Figuren 1 bis 9 zeigen, dass die erfindungsgemäßen Katalysatoren K1 bis K5 deutlich alterungsstabiler sind.

## Patentansprüche

1. Zeolith, der Mangan und Platin umfasst.

2. Zeolith nach Anspruch 1, **dadurch gekennzeichnet, dass** er dem Strukturtyp ABW, ACO, AEI, AEN, AFN, AFT, AFX, ANA, APC, APD, ATT, BEA, BIK, CDO, CHA, DDR, DFT, EAB, EDI, EPI, ERI, ESV, ETL, FAU, FER, GIS, GOO, IHW, KFI, LEV, LTA, MER, MFI, MON, MOR, MWW, NSI, OWE, PAU, PHI, RHO, RTH, SAT, SAV, SIV, SOD, STT, THO, TSC, UEI, VNI, YUG oder ZON angehört.

3. Zeolith nach Anspruch 1 und/oder 2, **dadurch gekennzeichnet, dass** der Zeolith einen SAR (silica-to-alumina ratio)-Wert von 2 bis 100 aufweist.

4. Zeolith gemäß einem oder mehreren der Ansprüche 1 bis 3, **dadurch gekennzeichnet, dass** das Platin in Mengen von 0,01 bis 20 Gew.-% vorliegt, bezogen auf die Summe der Gewichte von Zeolith, Mangan und Platin und berechnet als Manganmetall und Platinmetall.

5. Zeolith gemäß einem oder mehreren der Ansprüche 1 bis 4, **dadurch gekennzeichnet, dass** das Mangan in Mengen von 0,01 bis 20 Gew.-% vorliegt, bezogen auf die Summe der Gewichte von Zeolith, Mangan und Platin und berechnet als Manganmetall und Platinmetall.

6. Zeolith gemäß einem oder mehreren der Ansprüche 1 bis 5, **dadurch gekennzeichnet, dass** das Masseverhältnis Mangan : Platin 7:1 bis 1:20 ist, wobei Platin als Platinmetall und Mangan als Manganmetall berechnet ist.

7. Katalysator umfassend ein Trägersubstrat der Länge L und einen Zeolithen gemäß einem oder mehreren der Ansprüche 1 bis 6.

8. Verfahren zur Behandlung von Dieselabgasen, **dadurch gekennzeichnet, dass** das Dieselabgas über einen Katalysator gemäß Anspruch 7 geleitet wird.

9. Vorrichtung zur Reinigung der Abgase von Dieselmotoren, die einen Katalysator gemäß Anspruch 7 aufweist.
